# EUROPEAN PATENT SPECIFICATION

(11) **EP 0 793 584 B1**
(45) Date of publication and mention of the grant of the patent: **29.09.1999**
(21) Application number: 95925172.9
(22) Date of filing: 04.07.1995
(51) Int. Cl.: B60P 7/14, B63B 25/24

(54) **A DEVICE FOR SECURING LOADS**
VORRICHTUNG ZUR SICHERUNG VON LASTEN
DISPOSITIF SERVANT A ARRIMER DES CHARGEMENTS

(30) Priority: 05.07.1994 NO 942529
(43) Date of publication of application: 10.09.1997
(73) Proprietor: Fjeld, Aslak, 3745 Ulefoss (NO)
(72) Inventor: Fjeld, Aslak, 3745 Ulefoss (NO)
(74) Representative: Hynell, Magnus
(86) International application number: NO9500120
(87) International publication number: WO9601194

(56) References cited:
- WO-A-88/05006
- DE-A- 2 720 057
- GB-A- 2 181 997
- PATENT ABSTRACTS OF JAPAN, Vol. 12, No. 57, M-670; & JP,A,62 203 837 (NIPPON DORAIKEMIKARU K.K.), 8 Sept. 1987.

## Description

The invention concerns a device for securing loads, comprising a highly elastic bag of bag like membrane made of a rubber material or elastomer material which in an inflated state secures the load in a cargo compartment, the load being fixed by filling the bag previously installed in the ceiling of the cargo compartment with air from a pumping set, thereby securing the load.

When transporting loads and especially general cargo, it is essential that the load should be properly secured to prevent shifting during transport. Experience from the transport business has shown that damage frequently occurs to goods during transport by both car, boat, plane and railway. Moreover, shifting of a load or goods in a cargo compartment can result in serious accidents.

It is not only the physical damage caused during transport which is significant, but equally important are the consequences of the damage, such as:
- repeated irritation over transport damage to goods
- perpetual discussions on where the responsibility for the damage lies
- media coverage of accidents due to shifting of loads
- time lost with the use of traditional slinging, securing of the load
- different securing requirements for different types of goods (glass, liquids, timber, sand, sawdust, foodstuffs, etc.)
- the authorities' tightening up of the requirements for securing of loads.

Many different devices are known for securing loads, the most prevalent method currently in use being the use of slings and similar securing means. There are also systems wherein the load is enveloped in foil in order to collect a number of articles into one unit which can be more easily secured. However, no satisfactory method of securing loads has been discovered to date.

Thus a number of requirements exist for obtaining better securing of loads during transport. These include the following:
- automatic securing of the load with a minimum expenditure of time from a ready-loaded state to a ready-secured state (max. 5-7 min.)
- automatic tightening up of the load securing means during transport
- preparation for unloading in a minimum of time (max. 5 min.)
- making securing straps redundant
- securing all loads equally well, whether they be in a loose or a solid form, packed or unpacked
- reducing transport damage to a minimum level, adapting to most types of cargo compartment and cargo tank
- securing of loads also in connection with liquid media, e.g. in takers, by filling all cavities in the tank, thus keeping the liquid medium at rest (thereby also preventing the formation of explosive gases from, e.g., petrol in transport tanks)
- rapid installation of the security system, minimum time loss for the transporter (3-5 hours installation time).

The object of the present invention is to provide a device by means of which the above-mentioned problems are avoided and wherein as many as possible of the listed requirements can also be fulfilled.

This object is achieved with a device which is characterized in that the material which is used in the bag/membrane has an elasticity of elongation of minimum 500%, that the pressure in the bad/membrane is at a maximum in the order of approximately 735-835 kPa ((750-850 mm water column) in order to ensure that the load does not shift in any direction, calculated on the basis of those forces to which the load can be exposed, and that the bag/membrane has a breaking strength which at the rubber bag's working pressure of maximum 735-835 kPa (750-850 mm water column) can withstand being pressed on to a sharp object.

From DE-OS 27 20 057 which represents the closest prior art there is previously known a device for securing loads in a cargo compartment by means of an air cushion device. Here a sealed cushion is used which is supplied with air from a compressor. Suction can also be applied in order to empty the cushion so that it collapses again. However, in the German publication there is no mention of how great the pressure in the air cushion should be. In the previously known design the air cushion is constructed with "protuberances" and it seems quite obvious that the cushion is not intended to fill an entire cargo compartment, nor is it intended to fill all the gaps between the discrete articles in the load. The air cushion is intended to secure the load from above and partially also in the lateral direction by means of the extended or protruding sections of the cushion.

In contrast to this in the invention a bag is employed which is intended to fit snugly against the load, i.e. it should completely penetrate all the spaces and enclose rather than secure the load from the top.

In the invention a rubber bag, or a rubber membrane, is mounted in advance over the load. The membrane has a very high degree of elasticity or tensibility of min. 500% and is inflated so as to envelop the load, i.e. it fills all superfluous gaps between the cargo compartment's walls and ceiling and the load. The special feature here is that the rubber bag or rubber membrane should not only be inflatable but should also be made of a material which is so elastic that the goods or the discrete articles are completely enveloped. The bag or membrane will hereby fit snugly around the object and hold it in position, not only from above but in a lateral direction. It is therefore a case of complete enclosure under low pressure, i.e. it does not involve securing the goods by tightening as is achieved by a strap or by pressing them against a ceiling section or the like. The bag or membrane should not be too highly inflated, this being important with regard to its strength and it has a special breaking strength, thus ensuring that the device is not punctured by sharp objects. It is also important that it should be capable of withstanding temperature variations from extreme cold to extreme heat, e.g. in the range from -30°C to +95°C.

The rubber bag/membrane is suitably equipped with a pressure-control, thus providing continuous control of the load securing means. The bag is made of a material which permits exhaust gas to be used as filling material. In the case of inflammable loads or explosive loads the bag can be filled with, e.g., nitrogen. As mentioned above securing of the load by means of high pressure is not required, since the mechanism on which the invention is based is an enclosure of the load from all sides. Thus in order to achieve this desired securing method the rubber bag will be inflated to a maximum pressure of - approximately 750-850 mm said water column. This will provide a complete enclosure of the load, while at the same time the pressure is so low that the bag will not burst. Tests have been conducted and have shown that the breaking strength in a rubber bag or membrane for use in the invention has to reach a pressure of 1300 mm water column before a rupture will occur in the rubber membrane if it comes into contact with the point of a full length 3" nail or a sharp knife edge.

The invention will now be illustrated in more detail by means of an embodiment which is illustrated schematically in the drawing, in which a lorry is illustrated equipped with the devices according to the invention.

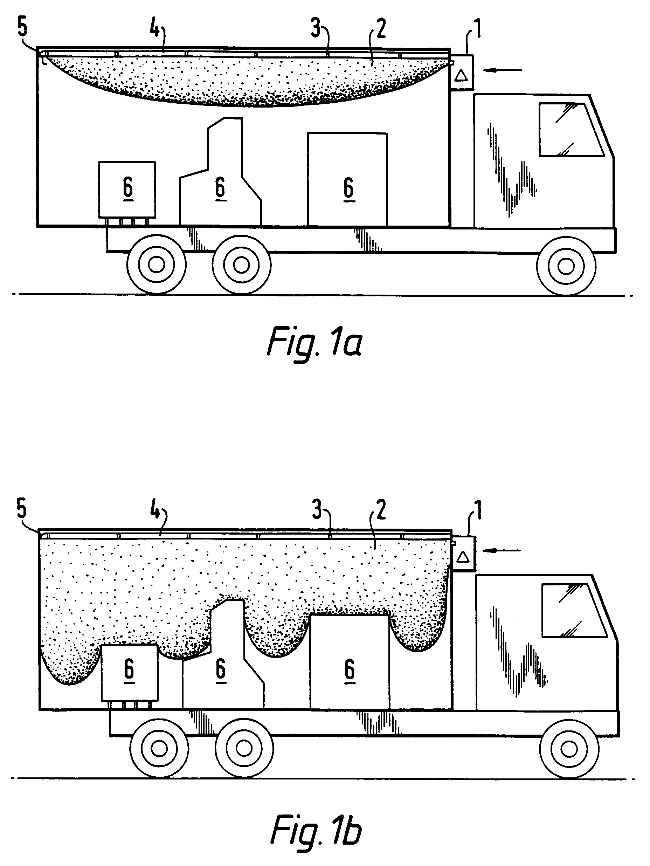

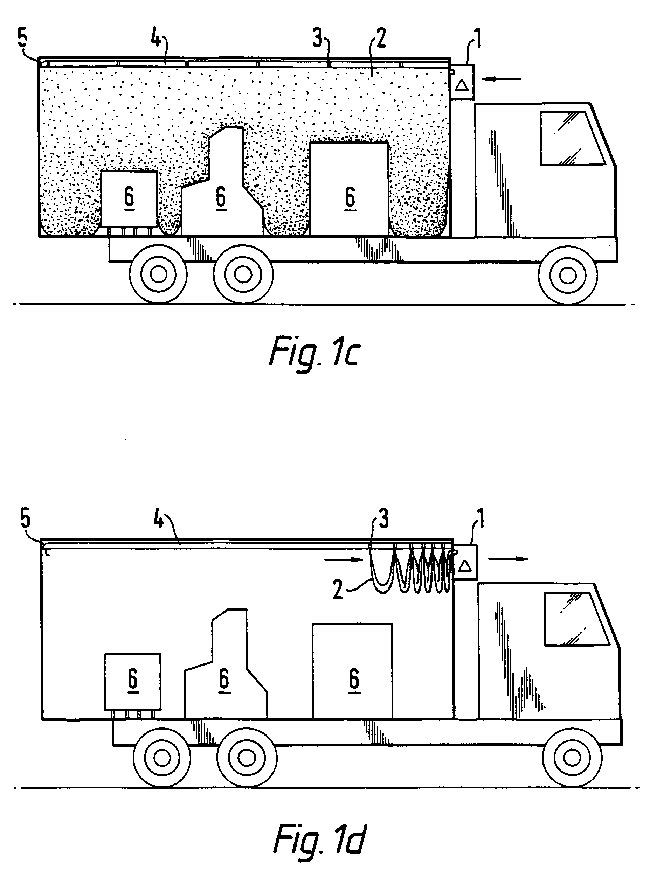

Figures 1a,b,c and d hereby illustrate various stages during the use of the device according to the invention in a schematic sectional view.

In the drawing there is illustrated an inflation and suction unit in the form of an air pumping set 1, which will be capable of inflating the rubber bag/membrane 2 with an output of 1.1kW and an air capacity of 214 m³ /h. This means that the time spent in filling a normal-speed cargo compartment in an ordinary sealed lorry will be approximately 3-5 min.

The rubber bag 2 is suspended and cross-fastened on cross laths 3 which extend in an attachment rail 4 along the ceiling of each of the cargo compartment's longitudinal sides. Before the rubber bag 2 is filled with air from the pumping set 1 the rubber bag 3, the top of which is secured on the cross laths 3, has to be manually extended to its full length, the cross laths sliding along the attachment rails 4 in the ceiling, and being locked at the rear edge with an end lock 5.

When the air from the pumping set 1 is forced into the rubber bag 2 it will expand and gradually envelop and secure the goods/load 6.

During unloading the air is evacuated from the rubber bag 2 by means of the pumping set 1. The upper and lower parts of the rubber bag are sucked together, forming a double membrane in the ceiling of the cargo compartment. If desired the end lock 5 can now be opened, and the evacuated rubber bag 2 can be folded up at the front of the cargo compartment, the cross laths 3, to which the rubber bag 2 is attached at points, being pushed in sliding tracks in the attachment rails 4 to the front part of the cargo compartment, as illustrated in figure 1d.

The pumping set 1 can consist of an electrically driven air pump with an air capacity of 214 m³/h, and an electronically controlled, 3-way valve mounted thereon for injection and discharge of air. A pressure sensor connected to the electronic control unit ensures that the pressure is kept constant in the rubber bag during transport. An adjustable safety valve ensures that the maximum pressure (e.g. 750 mm water column) in the rubber bag is not exceeded. As a material for the rubber bag/membrane any material can be used with the desired rubber-like properties, e.g. including synthetic rubber material or an elastomer or other material which has the said properties. The material may also have some degree of reinforcement. Especially for use in connection with inflammable goods a non-inflammable material is used for the bag/membrane. Further fireproofing can be obtained by filling the bag, e.g., with nitrogen or an extinguishing gas instead of air.

In the embodiment the invention is illustrated with articles which are placed at a distance from one another in a cargo compartment. The advantage of using a device according to the invention is that it will be possible to place the articles at a distance from one another, while until now the normal practice has been to place the elements so close together that they will bump into one another and thereby they can also be more easily fastened or secured by means of straps etc. By means of the device according to the invention the load will also be secured in the lateral direction, thus permitting the heaviest objects, e.g., to be placed above the wheels in order to secure road contact and fragile objects can be placed in the same compartment as heavy machine parts in such a manner that they are completely separate from one another. As mentioned above the system can also be employed for securing loose material or a load consisting of fluid, since the rubber bag will fill the remaining space in a tank or a packing case. Since high pressure is not used the method will provide a careful handling of the load during transport while at the same time firmly securing it in every direction.

## Claims

1. A device for securing loads, comprising a highly elastic bag of bag like membrane (2) made of a rubber material or elastomer material which in an inflated state secures the load (6) in a cargo compartment, the load being fixed by filling the bag (6) previously installed in the ceiling of the cargo compartment with air from a pumping set (1), thereby securing the load, characterized in that the material which is used in the bag/membrane (2) has an elasticity of elongation of minimum 500%, that the pressure in the bag/membrane is at a maximum in the order of approximately 735-835 kPa ((750-850 mm water column) in order to ensure that the load (6) does not shift in any direction, calculated on the basis of those forces to which the load can be exposed, and that the bag/membrane has a breaking strength which at the rubber bag's working pressure of maximum 735-835 kPa (750-850 mm water column) can withstand being pressed on to a sharp object.

2. A device according to claim 1,
characterized in that there is employed a pumping set (1), known per se, which is driven by an electric motor, wherein the air pressure is adjustable and controllable via a separate control unit.

3. A device according to claim 1,
characterized in that the material of the bag/membrane is temperature resistant over a range between -30°C and +95°C.

4. A device according to claim 1,
characterized in that the bag/membrane is suspended in securing rails in the ceiling of a cargo compartment and when the bag is evacuated can be pulled up towards the ceiling.

5. A device according to claim 4,
characterized in that the bag is suspended in pulleys provided in the securing rails and can be folded together.

6. A device according to claim 1,
characterized in that the bag/membrane is filled with nitrogen or another fire-extinguishing gas, the bag/membrane also preferably being made of a non-inflammable material.

## Patentansprüche

1. Vorrichtung zum Sichern von Lasten, die einen hochelastischen Beute oder eine beutelartige Membran (2) aus Gummimaterial oder Elastomermaterial umfaßt, der/die in einem aufgeblasenen Zustand die Last (6) in einem Laderaum sichert, wobei die Last fixiert wird, indem der zuvor an der Decke des Laderaums installierte Beutel (6) mit Luft von einer Pumpbaugruppe (1) gefüllt wird, um so die Last zu sichern, **dadurch gekennzeichnet**, daß das Material, das für den Beutel/die Membran (2) eingesetzt wird, eine Dehnungselastizität von wenigstens 500% hat, daß der Druck in dem Beute/der Membran maximal in der Größenordnung von ungefähr 735 - 835 kPa (750 - 850 mm Wassersäule) liegt, um zu gewährleisten, daß sich die Last (6) in keiner Richtung verschiebt, wobei dies auf der Grundlage der Kräfte berechnet wird, denen die Last ausgesetzt sein kann, und dadurch, daß der Beutel/die Membran so reißfest ist, daß er/sie bei dem Arbeitsdruck des Gummibeutels von maximal 735 - 835 kPa (750 - 850 mm Wassersäule) dem Aufpressen auf einen scharfen Gegenstand widersteht.

2. Vorrichtung nach Anspruch 1, **dadurch gekennzeichnet**, daß eine an sich bekannte Pumpbaugruppe (1) eingesetzt wird, die von einem Elektromotor angetrieben wird, wobei der Luftdruck über eine separate Steuereinheit eingestellt und gesteuert werden kann.

3. Vorrichtung nach Anspruch 1, **dadurch gekennzeichnet**, daß das Material des Beutels/der Membran über einen Bereich zwischen -30°C und +95°C temperaturbeständig ist.

4. Vorrichtung nach Anspruch 1, **dadurch gekennzeichnet**, daß der Beute/die Membran in Sicherungsschienen an der Decke eines Laderaums aufgehängt ist, und, wenn der Beutel leergepumpt ist, nach oben an die Decke gezogen werden kann.

5. Vorrichtung nach Anspruch 4, **dadurch gekennzeichnet**, daß der Beutel an Laufrollen aufgehängt ist, die in den Halteschienen angeordnet sind, und zusammengefaltet werden kann.

6. Vorrichtung nach Anspruch 1, **dadurch gekennzeichnet**, daß der Beutel/die Membran mit Stickstoff oder einem anderen feuerlöschenden Gas gefüllt ist, wobei der Beute/die Membran vorzugsweise ebenfalls aus einem nicht entflammbaren Material besteht.

## Revendications

1. Dispositif d'arrimage de chargements, comportant un sac extrêmement élastique en une membrane (2), en forme de sac faite d'un matériau de type caoutchouc ou d'un matériau élastomère qui, à l'état gonflé, arrime la charge (6) dans un compartiment à marchandises, la charge étant fixée par remplissage du sac (6), préalablement installé au plafond du compartiment à marchandises, avec de l'air provenant d'un groupe de pompage (1), arrimant ainsi la charge, caractérisé par le fait que le matériau qui est utilisé dans le sac/la membrane (2) a une élasticité de traction de minimum 500%, que la pression dans la sac/la membrane est, au maximum, de l'ordre d'environ 735-835 kPa (750-850 mm de colonne d'eau) pour garantir que la charge (6) ne ripe dans aucune direction, calculée sur la base des forces auxquelles la charge peut être exposée, et que le sac/la membrane a une résistance à la rupture qui, à la pression maximale de travail du sac en caoutchouc de 735-835 kPa (750-850 mm de colonne d'eau) peut résister s'il est pressé contre un objet pointu.

2. Dispositif selon la revendication 1,
caractérisé par le fait que l'on emploie un groupe de pompage (1), connu en soi, qui est entraîné par un moteur électrique, dans lequel la pression d'air est réglable et peut se commander par l'intermédiaire d'un groupe de commande distinct.

3. Dispositif selon la revendication 1,
caractérisé par le fait que le matériau du sac/de la membrane est résistant à la température sur une plage allant de -30°C à +95°C.

4. Dispositif selon la revendication 1,
caractérisé par le fait que le sac/la membrane est suspendu à des rails de fixation dans le plafond d'un compartiment à marchandises et que, lorsque le sac est mis sous vide, il peut être tiré en direction du plafond.

5. Dispositif selon la revendication 4,
caractérisé par le fait que le sac est suspendu à des poulies prévues sur les rails de fixation et peut se replier.

6. Dispositif selon la revendication 1,
caractérisé par le fait que le sac/la membrane est rempli d'azote ou d'un autre gaz extincteur, le sac/la membrane étant également fait de préférence d'un matériau ininflammable.
